# EUROPEAN PATENT APPLICATION

(11) **EP 4 497 558 A1**
(43) Date of publication of application: **29.01.2025**
(21) Application number: 23774761.3
(22) Date of filing: 16.03.2023
(51) Int. Cl.: B26F 1/24, G01N 35/02, G01N 35/10, B67B 7/48

(54) **PIERCING TOOL**

(30) Priority: 22.03.2022 JP 2022045776
(71) Applicant: FUJIFILM Corporation, Tokyo 106-8620 (JP)
(72) Inventor: HIBE, Daisuke, Ashigarakami-gun, Kanagawa 258-8538 (JP)
(74) Representative: Dehns Germany Partnerschaft mbB
(86) International application number: PCT/JP2023/010395
(87) International publication number: WO 2023/182165

(57) **Abstract**

Provided is a perforating tool 10 capable of perforating a sealing film for sealing an opening portion of a container that accommodates a liquid. The perforating tool 10 includes: a shaft portion 12 that is pierced through the sealing film and has a rod shape extending from a front end side to a base end side; and a large diameter portion 14 that is formed at a front end portion of the shaft portion 12, the large diameter portion 14 having a diameter of a circumcircle, which circumscribes an outer shape of a traverse cross section orthogonal to an axial direction, greater than a diameter of a circumcircle, which circumscribes an outer shape of the traverse cross section of the shaft portion 12. A length L1 from a front end of the shaft portion 12 to an end portion of the large diameter portion 14 on the base end side is shorter than a maximum insertion depth L2 of the shaft portion 12 into the container.

## Description

### BACKGROUND OF THE INVENTION

### 1. Field of the Invention

The technique of the present disclosure relates to a perforating tool.

### 2. Description of the Related Art

A liquid container that is used for examining a specimen and includes a well-like accommodating portion that accommodates a liquid such as a reagent and a sealing film that seals an opening portion formed in an upper portion of the accommodating portion is known. In such a liquid container, the sealing film is perforated by piercing the front end of the perforating tool into the sealing film. In such a liquid container, in a case where the sealing film is perforated by a perforating tool, the liquid, which is accommodated in the container, may be scattered to the outside of the container.

The perforating tool described in JP2005-37179A has a rod shape as a whole and has a shape which is sharp at the front end. The front end has a sharp shape, but thereafter, the perforating tool has a shaft portion having a constant diameter toward the base end side. By adopting such a shape of the front end of the rod-shaped perforating tool, excessive pressure applied to the sealing film during the perforation is suppressed, and scattering of the liquid in the container is suppressed.

### SUMMARY OF THE INVENTION

However, even in a case where the front end is formed in a sharp shape as in the perforating tool described in JP2005-37179A, the diameter of the shaft portion may be constant. In such a case, it is not sufficient to suppress scattering of the liquid in a case of perforating the sealing film. The reason is as follows. First, the front end of the perforating tool is pierced into the sealing film. Therefore, a through-hole having a diameter close to the diameter of the perforating tool is opened in the sealing film. Since the liquid in the container is attached to the rear surface of the sealing film, in a case where the through-hole is opened, the liquid attached to the rear surface of the sealing film encircles a gap between the through-hole and the perforating tool, and the liquid enters the gap. In a case where the diameter of the perforating tool and the diameter of the through-hole are close to each other, that is, in a case where the gap width between the perforating tool and the inner edge of the through-hole is narrow, the liquid is held to clog the gap. In a case where the diameter of the shaft portion is constant, even though an insertion amount of the perforating tool is large, a state where the gap width is narrow does not change, and a state where the liquid clogs the gap continues. On the other hand, a pressure in the container also increases by inserting the perforating tool into the container, and air in the container is about to be ejected to the outside of the container from the gap between the through-hole and the perforating tool. As the insertion amount of the perforating tool increases, the internal pressure increases, and the pressure at which the air in the container is about to be ejected to the outside of the container through the gap also increases. In a case where the insertion amount of the perforating tool further increases and the pressure in the container further increases, the air in the container eventually is ejected to the outside of the container together with the liquid which clogs the gap. With such a mechanism, the liquid held in the gap between the through-hole and the perforating tool may be ejected to the outside of the container, and the liquid may be scattered around the through-hole.

An object of a technique according to the present disclosure is to suppress scattering of a liquid to an outside of a container in a case where a sealing film that seals an opening portion of the container which accommodates the liquid is perforated.

According to an aspect of the present disclosure, there is provided a perforating tool capable of perforating a sealing film for sealing an opening portion of a container that accommodates a liquid, the perforating tool comprising: a shaft portion that is pierced through the sealing film and has a rod shape extending from a front end side to a base end side; and a large diameter portion that is formed at a front end portion of the shaft portion, the large diameter portion having a diameter of a circumcircle, which circumscribes an outer shape of a traverse cross section orthogonal to an axial direction, greater than a diameter of a circumcircle, which circumscribes an outer shape of the traverse cross section of the shaft portion, in which a length from a front end of the shaft portion to an end portion of the large diameter portion on the base end side is shorter than a maximum insertion depth of the shaft portion into the container.

In the perforating tool according to the aspect of the present disclosure, the large diameter portion may be formed of a plate-like portion that protrudes in a radial direction of the shaft portion and that has a plate surface extending in the axial direction.

**In** the perforating tool according to the aspect of the present disclosure, a plurality of the plate-like portions may be formed at positions which are symmetric with respect to the shaft portion as a center.

In the perforating tool according to the aspect of the present disclosure, a thickness of the plate-like portion may be less than an outer diameter of the shaft portion.

In the perforating tool according to the aspect of the present disclosure, a front end surface, which is an edge surface of the shaft portion on the front end side, may have an inclined surface that is inclined toward the base end side with respect to a direction orthogonal to the axial direction of the shaft portion, the inclined surface forming an acute angle with a straight line extending in the axial direction.

In the perforating tool according to the aspect of the present disclosure, in a case where the front end surface, which is the edge surface of the shaft portion on the front end side, has the inclined surface that is inclined toward the base end side with respect to the direction orthogonal to the axial direction of the shaft portion, the inclined surface forming the acute angle with the straight line extending in the axial direction, the front end surface may have, in addition to the inclined surface, an orthogonal surface which is connected to the inclined surface and which is orthogonal to the axial direction.

In the perforating tool according to the aspect of the present disclosure, in a case where the front end surface, which is the edge surface of the shaft portion on the front end side, has the inclined surface that is inclined toward the base end side with respect to the direction orthogonal to the axial direction of the shaft portion, the inclined surface forming the acute angle with the straight line extending in the axial direction, the front end surface may be formed of only the inclined surface.

In the perforating tool according to the aspect of the present disclosure, a front end of the plate-like portion may be disposed at a position which is offset from a front end surface as an edge surface of the shaft portion on the front end side toward the base end side.

In the perforating tool according to the aspect of the present disclosure, a front end side part of the plate-like portion may have a shape in which a width of the shaft portion in the radial direction is reduced from the base end side toward the front end side.

In the perforating tool according to the aspect of the present disclosure, a base end side part of the plate-like portion may have a shape in which a width of the shaft portion in the radial direction is reduced from the front end side toward the base end side.

In the perforating tool according to the aspect of the present disclosure, the large diameter portion may be a tubular portion having a circular or polygonal cross-sectional shape orthogonal to the axial direction.

In the perforating tool according to the aspect of the present disclosure, the tubular portion may have a shape similar to the shaft portion and has a shape in which a diameter of the shaft portion is increased.

In the perforating tool according to the aspect of the present disclosure, a front end surface, which is an edge surface of the tubular portion on the front end side, may have an inclined surface that is inclined toward the base end side with respect to a direction orthogonal to the axial direction of the shaft portion, the inclined surface forming an acute angle with a straight line extending in the axial direction.

In the perforating tool according to the aspect of the present disclosure, in a case where the front end surface, which is the edge surface of the tubular portion on the front end side, has the inclined surface that is inclined toward the base end side with respect to the direction orthogonal to the axial direction of the shaft portion, the inclined surface forming the acute angle with the straight line extending in the axial direction, the front end surface may have, in addition to the inclined surface, an orthogonal surface which is connected to the inclined surface and which is orthogonal to the axial direction.

In the perforating tool according to the aspect of the present disclosure, in a case where the front end surface, which is the edge surface of the tubular portion on the front end side, has the inclined surface that is inclined toward the base end side with respect to the direction orthogonal to the axial direction of the shaft portion, the inclined surface forming the acute angle with the straight line extending in the axial direction, the front end surface may be formed of only the inclined surface.

In the perforating tool according to the aspect of the present disclosure, the shaft portion may be inserted into the tubular portion.

In the perforating tool according to the aspect of the present disclosure, at least one of front end surfaces, which are edge surfaces of the shaft portion and the tubular portion on the front end side, may have an inclined surface that is inclined toward the base end side with respect to a direction orthogonal to the axial direction of the shaft portion, the inclined surface forming an acute angle with a straight line extending in the axial direction.

In the perforating tool according to the aspect of the present disclosure, in a case where at least one of the front end surfaces, which are the edge surfaces of the shaft portion and the tubular portion on the front end side, has an inclined surface that is inclined toward the base end side with respect to the direction orthogonal to the axial direction of the shaft portion, the inclined surface forming the acute angle with the straight line extending in the axial direction, the front end surface may have, in addition to the inclined surface, an orthogonal surface which is connected to the inclined surface and which is orthogonal to the axial direction.

In the perforating tool according to the aspect of the present disclosure, in a case where at least one of the front end surfaces, which are the edge surfaces of the shaft portion and the tubular portion on the front end side, has the inclined surface that is inclined toward the base end side with respect to the direction orthogonal to the axial direction of the shaft portion, the inclined surface forming the acute angle with the straight line extending in the axial direction, the front end surface may be formed of only the inclined surface.

In the perforating tool according to the aspect of the present disclosure, the shaft portion may have a pipe line which is formed therein and through which a liquid flows, and functions as a nozzle through which the liquid is suctioned and discharged.

According to the technique of the present disclosure, it is possible to suppress scattering of the liquid to the outside of the container in a case of perforating the sealing film for sealing the opening portion of the container which accommodates the liquid.

### BRIEF DESCRIPTION OF THE DRAWINGS

Fig. 1 is a perspective view showing a cartridge as an example of a container into which a hole can be perforated by a perforating tool according to the present disclosure.
Fig. 2A is a cross-sectional view showing a cartridge as an example of the container into which a hole can be perforated by the perforating tool according to the present disclosure, and Fig. 2B is a top view.
Fig. 3A is a perspective view showing the perforating tool according to a first embodiment of the present disclosure, Fig. 3B is a side view showing a state where the perforating tool is being inserted into the container, Fig. 3C is a side view showing a state where the perforating tool is being inserted into the container, and Fig. 3D is a cross-sectional view taken along a line D-D of Figs. 3B and 3C.

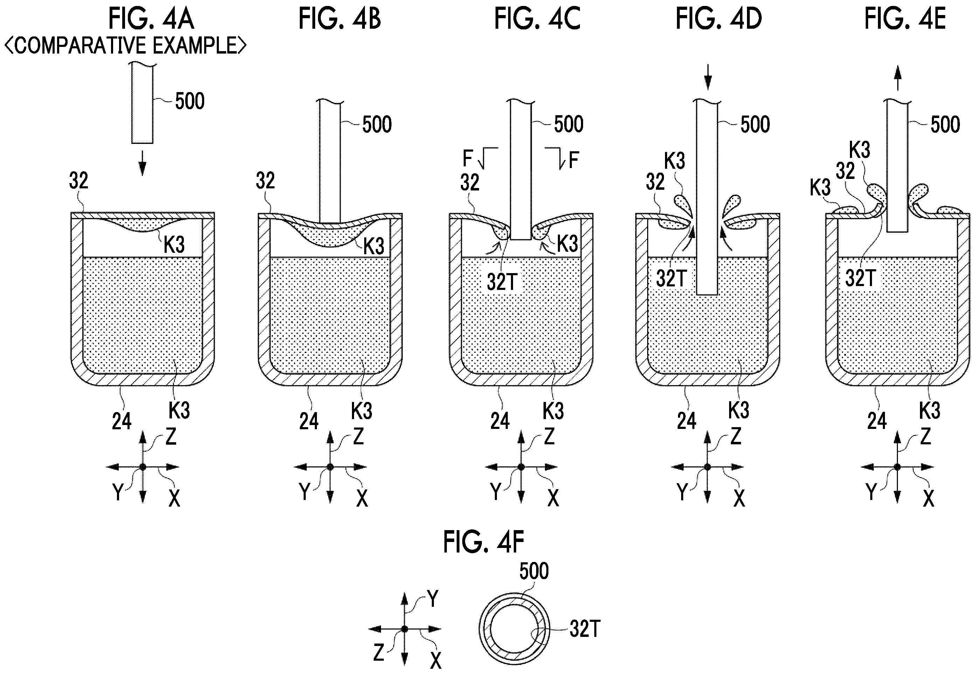

Fig. 4A is a side view showing a state where a perforating tool according to a comparative example is about to perforate the sealing film of the container, Fig. 4B is a side view showing a state where the perforating tool is being pressed against the sealing film, Fig. 4C is a side view showing a state where the sealing film has been perforated, Fig. 4D is a side view showing a state where the perforating tool is being inserted into the container, Fig. 4E is a side view showing a state where the perforating tool has been pulled out from the container, and Fig. 4F is a view as viewed from arrows of a line F-F in Fig. 4C.
Fig. 5 is a side view showing an example of a situation of scattering of the liquid in a case where the perforating tool according to the comparative example perforates the sealing film of the container.
Fig. 6A is a side view showing a state where the sealing film of the container is being perforated by the perforating tool according to the present disclosure, Fig. 6B is a side view showing a state where the perforating tool is being pressed against the sealing film, Fig. 6C is a side view showing a state where the sealing film has been perforated, Fig. 6D is a side view showing a state where the perforating tool is being inserted into the container, and Fig. 6E is a side view showing a state where the perforating tool has been pulled out from the container.
Fig. 7A is a perspective view showing a state where the perforating tool according to the present disclosure is inserted into the container, and Fig. 7B is a plan view showing a shape of the through-hole.
Fig. 8A is a perspective view showing a modification example of the perforating tool according to the first embodiment of the present disclosure, and Fig. 8B is a side view thereof.
Fig. 9A is a perspective view showing a modification example of the perforating tool according to the first embodiment of the present disclosure, and Fig. 9B is a side view thereof.
Fig. 10A is a side view showing a situation where a liquid is being attached to the front end of a perforating tool according to the first embodiment of the present disclosure, Fig. 10B is a side view showing a situation where a liquid is being attached to the front end of the perforating tool of the modification example, and Fig. 10C is a side view showing a situation where a liquid is being attached to the front end of the perforating tool of the other modification example.
Fig. 11A is a perspective view showing a modification example of the perforating tool according to the first embodiment of the present disclosure, and Fig. 11B is a side view thereof.
Fig. 12A is a side view showing a situation where a liquid is being attached to the front end of the perforating tool according to the first embodiment of the present disclosure, and Fig. 12B is a side view showing a situation where a liquid is being attached to the front end of the perforating tool of the modification example.
Fig. 13A is a perspective view showing a modification example of the perforating tool according to the first embodiment of the present disclosure, and Fig. 13B is a side view thereof.
Fig. 14A is a perspective view showing a modification example of the perforating tool according to the first embodiment of the present disclosure, and Fig. 14B is a side view thereof.
Fig. 15A is a perspective view showing a perforating tool according to a second embodiment of the present disclosure, Fig. 15B is a cross-sectional view showing a state where the perforating tool is inserted into the container, and Fig. 15C is a cross-sectional view taken along a line C-C of Fig. 15B.
Fig. 16A is a cross-sectional view showing a modification example of the perforating tool according to the second embodiment of the present disclosure, and Fig. 16B is a cross-sectional view showing another modification example thereof.
Fig. 17A is a cross-sectional view showing a modification example of the perforating tool according to the second embodiment of the present disclosure, Fig. 17B is a cross-sectional view showing another modification example thereof, and Fig. 17C is a cross-sectional view showing still another modification example thereof.
Fig. 18A is a cross-sectional view showing a modification example of the perforating tool according to the second embodiment of the present disclosure, Fig. 18B is a cross-sectional view showing another modification example thereof, and Fig. 18C is a cross-sectional view showing still another modification example thereof.

### DESCRIPTION OF THE PREFERRED EMBODIMENTS

Hereinafter, a perforating tool according to an embodiment of the present disclosure will be described, with reference to the drawings. The constituent elements indicated by the same reference numerals in the drawings mean the same constituent elements. However, unless otherwise specified in the specification, each constituent element is not limited to one, and a plurality of each constituent element may be present.

Further, description of overlapping configurations and reference numerals in the respective drawings may be omitted. It should be noted that the present disclosure is not limited to the embodiments below, and can be implemented with appropriate modifications, such as omitting a configuration or replacing a configuration with a different configuration within the scope of the object of the present disclosure.

In each drawing, directions indicated by arrows X and Y are directions along the horizontal plane and are orthogonal to each other. Further, the direction indicated by the arrow Z is a direction along the perpendicular direction (vertical direction). The directions indicated by the arrows X, Y, and Z in respective figures match each other.

### <Cartridge>

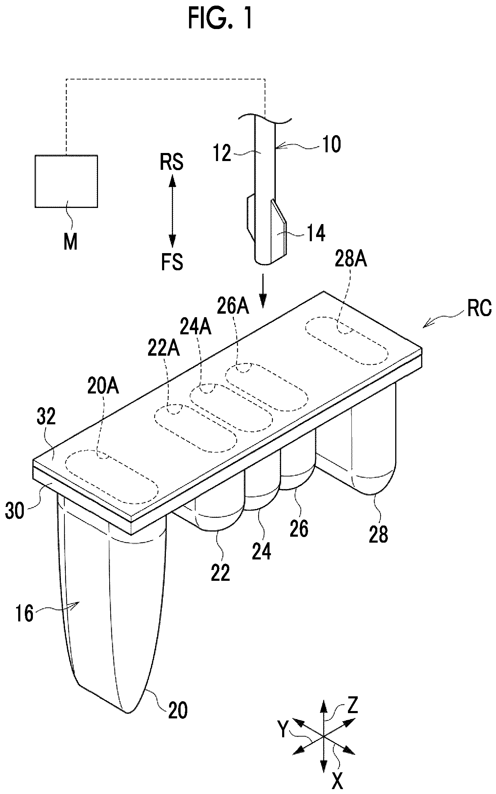

The perforating tool 10 according to the embodiment of the present disclosure is, for example, a nozzle having a function of suctioning and discharging a liquid accommodated in the cartridge RC shown in Fig. 1. The cartridge RC is, for example, a liquid container loaded into an immunological analysis apparatus. In the immunological analysis apparatus, for example, a detecting process of labeling a substance to be detected in a specimen such as blood collected from a living body and detecting light from the label is executed. The cartridge RC is an example of the container which accommodates the liquid.

The cartridge RC accommodates the liquid for executing the detecting process. Examples of the liquid accommodated in the cartridge RC include a buffer solution which is mixed with a specimen, a labeling reagent including a label modified with a binding substance that specifically binds to a target substance in the specimen, and a luminescent reagent for causing the label to emit light.

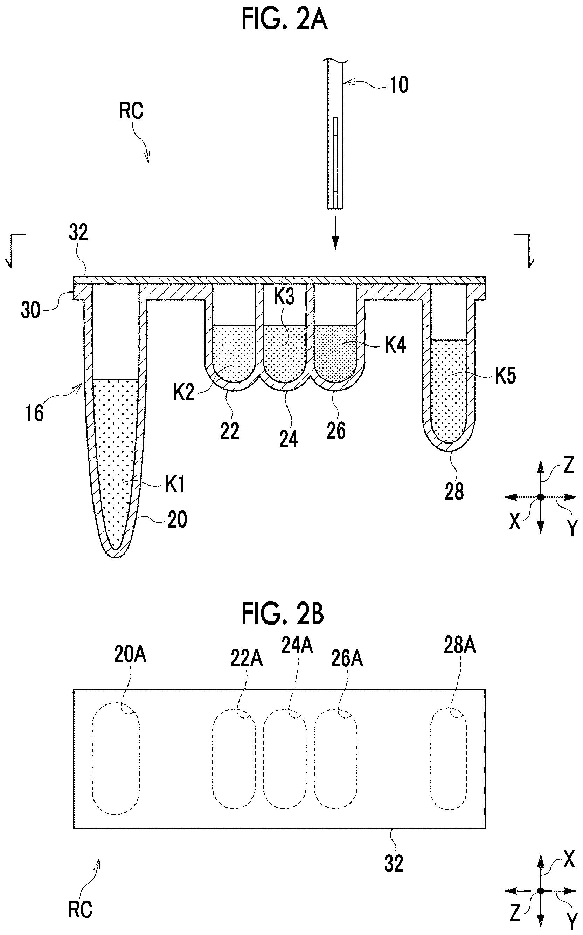

As shown in Figs. 2A and 2B, the cartridge RC includes a container body 16 and a sealing film 32. The container body 16 is provided with a plurality of accommodating portions 20, 22, 24, 26, and 28 that accommodate liquids such as the specimen, the buffer solution, and the reagent. Each of the accommodating portions 20, 22, 24, 26, and 28 has a well shape, and an opening portion 20A, 22A, 24A, 26A, or 28A is formed in an upper end portion of each of the accommodating portions 20, 22, 24, 26, and 28. The container body 16 is, for example, a plastic molded product, and integrally forms a plurality of accommodating portions 20, 22, 24, 26, and 28. A plate-like top board portion 30 is formed on an upper end side of the container body 16, and the top board portion 30 also functions as a connecting portion that connects the respective accommodating portions 20, 22, 24, 26, and 28.

As shown in Fig. 2B, the planar shapes (shapes in a case where the container body 16 is plan-viewed from an upper side) of the opening portion 20A, the opening portions 22A, 24A, 26A, and 28A are, for example, elongated circular shapes. The opening portions 20A, 22A, 24A, 26A, and 28A are disposed in parallel with each other in an attitude in which the longitudinal directions of the respective elongated circular shapes are parallel to each other along the longitudinal direction (Y direction) of the cartridge RC.

The planar shape of the top board portion 30 is a rectangular shape. One sealing film 32 is attached to an upper surface of the top board portion 30. The sealing film 32 has a shape and a size conforming to the outer shape of the top board portion 30. In a case where the sealing film 32 is attached to the upper surface of the top board portion 30 in such a manner, the sealing film 32 seals the opening portions 20A, 22A, 24A, 26A, and 28A. The sealing film 32 is made of an aluminum film material and can be perforated by being pierced by a rod-shaped member such as the perforating tool 10.

As shown in Fig. 2A, in the cartridge RC of the present example, among the five accommodating portions 20, 22, 24, 26, and 28, the boundaries of the three accommodating portions 22, 24, and 26 disposed at the center are in contact with each other, and the wall portions of the adjacent accommodating portions are shared. The accommodating portion 20 and the accommodating portion 28 are respectively disposed on both sides of the three accommodating portions 22, 24, and 26. Each of the boundaries of the accommodating portion 20 and the accommodating portion 28 is not in contact with each of the accommodating portion 22 and the accommodating portion 26, and the wall portions are also independent. Thereby, an interval between the accommodating portion 20 and the accommodating portion 22 and an interval between the accommodating portion 26 and the accommodating portion 28 are relatively wider than the intervals between the three accommodating portions 22, 24, and 26.

For example, the accommodating portion 20 accommodates a reagent K1, the accommodating portions 22 and 24 accommodate luminescent reagents K2 and K3, respectively, the accommodating portion 26 accommodates a labeling reagent K4, and the accommodating portion 28 accommodates a buffer solution K5.

### <First Embodiment of Perforating Tool>

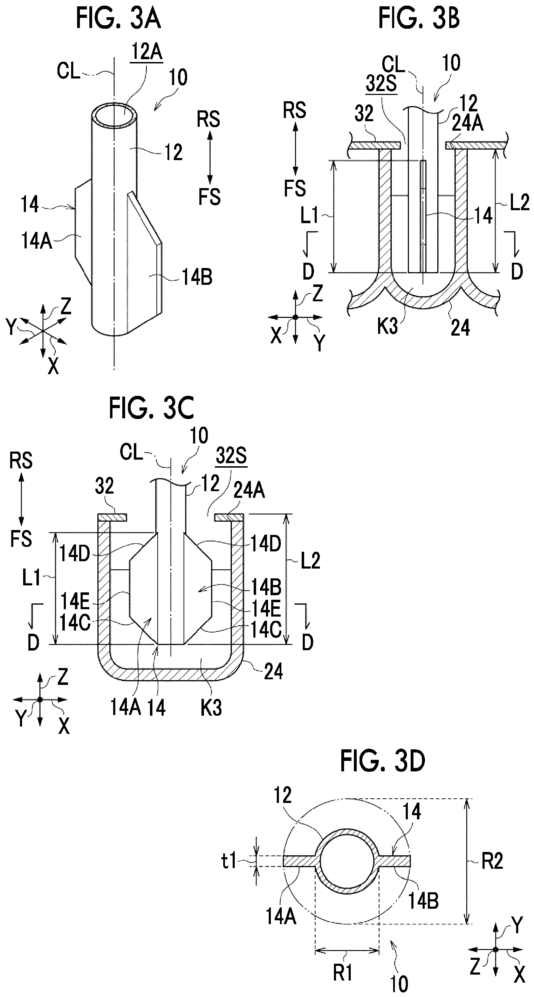

The perforating tool 10 shown in Figs. 3A, 3B, and 3C is a perforating tool capable of perforating the sealing film that seals the opening portion of the container which accommodates the liquid. That is, the perforating tool 10 is a perforating tool capable of perforating the sealing film 32 that seals the opening portions 20A, 22A, 24A, 26A, and 28A which are formed in the accommodating portions 20, 22, 24, 26, and 28 of the cartridge RC shown in Fig. 1.

The perforating tool 10 according to the present example is provided in a dispensing mechanism provided in the above-mentioned immunological analysis apparatus (not shown in the drawing). The drive unit M is a drive unit of the dispensing mechanism. The drive unit M moves the perforating tool 10 in the up-down direction by a predetermined stroke in the immunological analysis apparatus. Thereby, the drive unit M inserts the perforating tool 10 into each of the accommodating portions 20, 22, 24, 26, and 28 of the cartridge RC loaded into the immunological analysis apparatus, or pulls out the perforating tool 10 from each of the accommodating portions 20, 22, 24, 26, and 28. Since the perforating tool 10 according to the present example also has a function of the nozzle, the perforating tool 10 suctions and discharges the liquid in each of the accommodating portions 20, 22, 24, 26, and 28.

As shown in Figs. 3A, 3B, and 3C, the perforating tool 10 includes a rod-shaped shaft portion 12 extending from a front end side FS that pierces the sealing film 32 to a base end side RS, and a large diameter portion 14 formed at a front end portion of the shaft portion 12.

The shaft portion 12 has a tubular shape which has a circular cross section orthogonal to an axial direction of the shaft portion 12. The shaft portion 12 has a pipe line 12A which is formed therein and through which a liquid flows, and functions as the nozzle that suctions and discharges the liquid as described above. In the present example, an edge surface of the shaft portion 12 on the front end side is formed as a surface orthogonal to the axial direction of the shaft portion 12. It should be noted that Figs. 3A to 3D each show a central line of the shaft portion 12 as a central line CL. The "axial direction" of the shaft portion 12 is a direction along the central line CL.

On the other hand, the large diameter portion 14 protrudes in a radial direction of the shaft portion 12 and is formed of two plate-like portions 14A and 14B in which plate surfaces extend in the axial direction of the shaft portion 12. The "radial direction" of the shaft portion 12 is a direction orthogonal to the axial direction of the shaft portion 12 and a direction intersecting with the central line CL.

The plate-like portions 14A and 14B are formed at positions which are symmetric with respect to the shaft portion 12 as a center. In the present example, a pair of plate-like portions 14A and 14B have shapes of blades protruding on both sides in the radial direction from the shaft portion 12. Further, as shown in Fig. 3D, a thickness t1 of the plate-like portions 14A and 14B is less than a diameter R1 of the shaft portion 12.

As shown in Fig. 3C, front end side parts 14C of the plate-like portions 14A and 14B have a shape in which the width in the radial direction of the shaft portion 12 is reduced from the base end side RS toward the front end side FS. The front end positions of the plate-like portions 14A and 14B in the axial direction of the shaft portion 12 match the front end position of the shaft portion 12. On the other hand, base end side parts 14D of the plate-like portions 14A and 14B each have a shape in which the width in the radial direction of the shaft portion 12 decreases from the front end side FS toward the base end side RS.

Further, a width of a part between the front end side part 14C and the base end side part 14D of each of the plate-like portions 14A and 14B, that is, a width of the central side part 14E of each of the plate-like portions 14A and 14B, in the radial direction of the shaft portion 12 is constant along the axial direction of the shaft portion 12.

Thereby, each of the plate-like portions 14A and 14B is formed in a trapezoidal shape in which a long bottom side thereof is bonded to the shaft portion 12 and a short bottom side thereof is disposed at a position separated from the shaft portion 12, as viewed from a normal direction of the surfaces of the plate-like portions 14A and 14B (that is, as viewed in front of the plate-like portions 14A and 14B).

Here, as shown in Fig. 3D, a diameter R2 of a circumcircle which circumscribes an outer shape of a cross section of the large diameter portion 14 formed of the plate-like portions 14A and 14B is greater than a diameter R1 of a circumcircle which circumscribes an outer shape of a cross section of the shaft portion 12. The "cross section" of the large diameter portion 14 and the "cross section" of the shaft portion 12 are cross sections orthogonal to the axial direction of the shaft portion 12, and are cross sections (parts indicated by the hatching in Fig. 3D) which are cut by the line D-D in Figs. 3B and 3C. In the present specification, the diameter of the circumcircle circumscribing the outer shape greater than that of the comparison target is referred to as a "large diameter". That is, the outer shape of the cross section of the large diameter portion 14 is not always circular, and the diameter of the large diameter is a diameter of the circumcircle. On the other hand, the outer shape of the cross section of the shaft portion 12 other than the large diameter portion 14, that is, the outer shape of the cross section of the shaft portion 12 in a part, in which the plate-like portions 14A and 14B are not provided, is circular, and the circumcircle thereof matches the outer shape of the cross section of the shaft portion 12. Consequently, the large diameter of the large diameter portion 14 means that the large diameter is greater than the comparison target in a case where the diameter of the outer shape of the cross section of the shaft portion 12 is used as the comparison target.

Further, as shown in Figs. 3B and 3C, a length L1 from the front end of the shaft portion 12, that is, the front end of the perforating tool 10, to the end portion of the large diameter portion 14 on the base end side RS is shorter than a maximum insertion depth L2 with respect to the accommodating portion (for example, the accommodating portion 24) of the shaft portion 12. The "maximum insertion depth" refers to a maximum value of an insertion amount of the perforating tool 10 to be inserted into the accommodating portion 24 in a case of performing suction or discharge. The maximum insertion depth is a value determined by setting a stroke of the drive unit M (refer to Fig. 1) within a range of a depth of the accommodating portion 24 (the length from the sealing film 32 to the bottom portion of the accommodating portion 24). The meaning of defining of the maximum insertion depth L2 is that, in a case where the perforating tool 10 is inserted into the accommodating portion 24, it is necessary that the entire large diameter portion 14 enters the accommodating portion 24 and the upper end of the large diameter portion 14 is positioned under the sealing film 32.

In such a manner, the maximum insertion depth L2 changes in accordance with the depth of the accommodating portion. In a case where the cartridge RC is provided with five accommodating portions as in the present example and the perforating tool 10 is shared by a plurality of accommodating portions, it is preferable that the maximum insertion depth L2 and the length L1 are determined in accordance with the accommodating portion having the shallowest depth.

Further, in the following description, the accommodating portion, into which the perforating tool 10 or the perforating tool according to various modification examples is inserted, may be described as an example of the "accommodating portion 24", but this is for convenience and the accommodating portion 24 is just an example. The accommodating portion, into which the perforating tool 10 or the perforating tool according to various modification examples is inserted, may be any of the accommodating portions 20, 22, 24, 26, and 28.

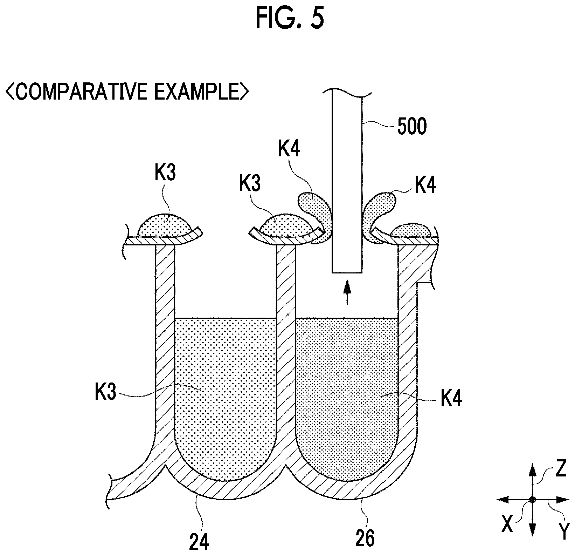

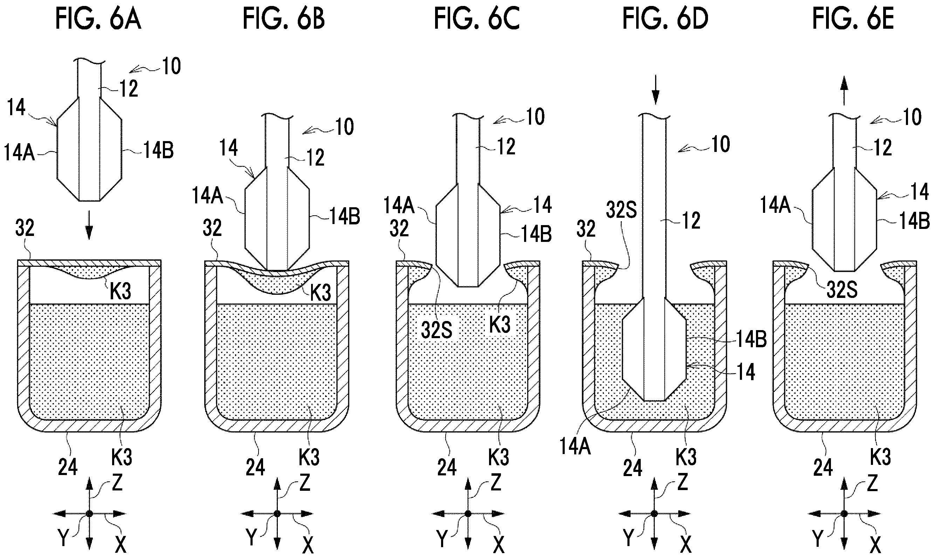

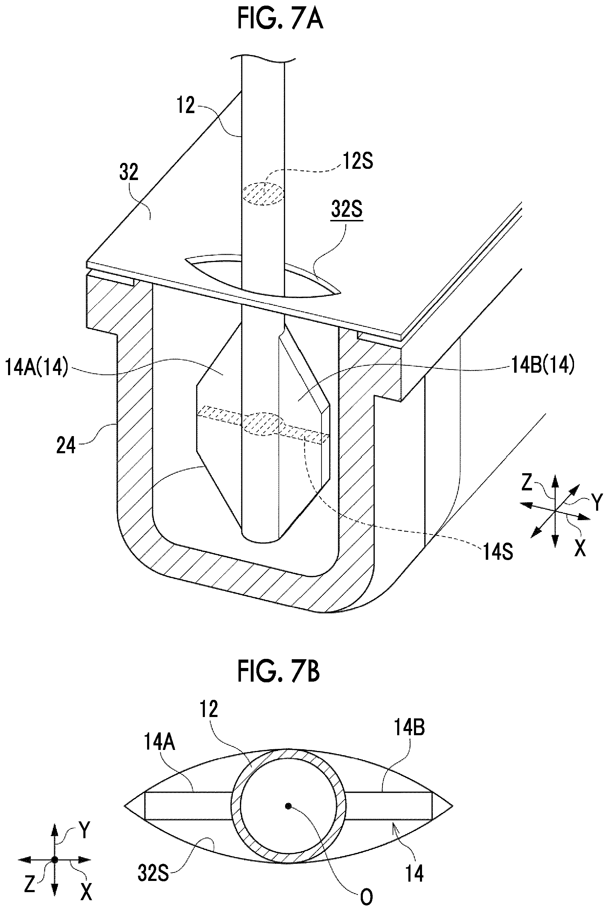

Hereinafter, the actions and effects of the perforating tool 10 having the above-mentioned configuration will be described with reference to Figs. 4A to 7B. Figs. 4A and 5 show a comparative example. First, the comparative example will be described with reference to Figs. 4A and 5. Then, the actions and effects of the perforating tool 10 according to the present example will be described with reference to Figs. 6A and 7B in comparison with the comparative example.

### (Comparative Example)

As shown in Fig. 4A, a perforating tool 500 of the "comparative example" does not have a large diameter portion formed therein, and the diameter of the shaft portion is constant in a range from the front end side to the base end side. As shown in Fig. 4B, the sealing film 32 is pressed by the front end of the perforating tool 500, and as shown in Fig. 4C, the perforating tool 500 pierces the sealing film 32. Therefore, a through-hole 32T having a diameter close to the diameter of the shaft portion of the perforating tool 500 is opened in the sealing film 32. The luminescent reagent K3 (hereinafter, referred to as a liquid K3) in the accommodating portion 24 is attached to the rear surface of the sealing film 32. Therefore, in a case where the through-hole 32T is opened, the liquid K3 attached to the rear surface of the sealing film 32 encircles a gap between the through-hole 32T and the perforating tool 500, and the liquid K3 enters the gap. In a case where a diameter of the perforating tool 500 and a diameter of the through-hole 32T are approximate to each other, that is, in a case where a gap width between the perforating tool 500 and an inner edge of the through-hole 32T is narrow, the liquid K3 is held so as to clog the gap.

In a case where the diameter of the shaft portion is constant as in the case of the perforating tool 500 according to the comparative example, even though the insertion amount of the perforating tool 500 is large, the state where the gap width is narrow does not change, and the state where the liquid K3 clogs the gap continues. On the other hand, the pressure in the accommodating portion 24 increases due to the insertion of the perforating tool 500 into the accommodating portion 24, and the air in the accommodating portion 24 is about to be ejected to the outside of the accommodating portion 24 from the gap between the through-hole 32T and the perforating tool 500. As the insertion amount of the perforating tool 500 increases, the internal pressure increases, and the pressure, at which the air in the accommodating portion 24 is about to be ejected to the outside of the accommodating portion 24 through the gap, also increases. As shown in Fig. 4D, in a case where the insertion amount of the perforating tool 500 further increases and the pressure in the accommodating portion 24 further increases, the air in the accommodating portion 24 is eventually ejected to the outside of the container together with the liquid K3 that clogs the gap. Due to such a mechanism, the liquid K3 held in the gap between the through-hole 32T and the perforating tool 500 may be ejected to the outside of the accommodating portion 24, and the liquid K3 may be scattered around the through-hole 32T. Further, in a case where the cartridge RC is heated, the pressure is also increased due to the temperature increase. Thus, the ejection amount tends to be further increased.

Further, as shown in Fig. 4E, in a case where the perforating tool 500 is pulled out from the accommodating portion 24, the sealing film 32 may be pulled by the perforating tool 500 through a frictional force between the inner edge of the through-hole 32T and the perforating tool 500, and a state where the circumference of the through-hole 32T protrudes to the outside of the accommodating portion 24 may occur. In such a case, there is a concern that the liquid K3 attached to the rear surface of the sealing film 32 around the through-hole 32T may be ejected and scattered to the outside of the accommodating portion 24 from the through-hole 32T. In a case where the liquid K3 is scattered to the outside of the accommodating portion 24, there is a concern that an environment in which the cartridge RC (refer to Fig. 1) is disposed may be contaminated.

Then, in a state where the liquid K3 is scattered to the outside of the accommodating portion 24, as shown in Fig. 5, for example, in a case where the sealing film 32 covering the accommodating portion 26 adjacent to the accommodating portion 24 is perforated using the perforating tool 500, the liquid (the labeling reagent K4: hereinafter, referred to as a liquid K4) may be scattered to the outside of the accommodating portion 26 and the accommodating portion 24. Thereby, the two liquids (the liquid K3 and the liquid K4) are mixed outside the accommodating portions 24 and 26.

In a case where the two liquids are mixed in such a manner, the mixed liquid may be attached to the perforating tool 500. In a case where each of the liquids is used individually to perform the examination, another liquid is mixed into each of the liquids. Therefore, unintended contamination between liquids occurs, which may affect the examination results. Further, even in a case where each of the liquids is quantitatively mixed and the examination is performed, an error occurs in an amount of mixture, which may affect the examination results.

### <Actions and Effects>

On the other hand, as shown in Fig. 3A, in the perforating tool 10 according to the present disclosure, the large diameter portion 14 is formed at the front end portion of the shaft portion 12. As shown in Fig. 3D, in the large diameter portion 14, the diameter R2 of the circumcircle of the traverse cross section orthogonal to the axial direction of the shaft portion 12 is greater than the diameter R1 of the circumcircle of the traverse cross section of the shaft portion 12.

As shown in Fig. 6A, in a case where the sealing film 32 is perforated using the perforating tool 10. As shown in Fig. 6B, the front end of the perforating tool 10 presses the sealing film 32. As shown in Fig. 6C, the perforating tool 10 is pierced into the sealing film 32. Therefore, a through-hole 32S is opened in the sealing film 32. Specifically, as shown in Fig. 7A, the sealing film 32 is perforated by the large diameter portion 14 formed in the shaft portion 12 and the front end portion of the shaft portion 12, and the through-hole 32S is formed in the sealing film 32. An area of the through-hole 32S is greater than an area of the traverse cross section 12S of the shaft portion 12, and is further greater than an area of the traverse cross section 14S of the large diameter portion 14.

The reason for this is that, in the sealing film 32, the through-hole 32S is formed by connecting a part that is formed by being perforated by the shaft portion 12 and a part that is formed by being perforated by the large diameter portion 14. However, the through-hole 32S tends to be formed to connect positions that are most distant from a central point O of the shaft portion 12 in the outer circumferential portions of the shaft portion 12 and the large diameter portion 14 as shown in Fig. 7B. That is, by using the perforating tool 10, the through-hole having the large diameter can be formed as compared with the perforating tool 500 according to the comparative example in which the large diameter portion 14 is not formed.

Therefore, a large gap is formed between the shaft portion 12 and the inner edge of the through-hole 32S. Therefore, even in a case where the liquid K3 is attached to the rear side of the sealing film 32 around the through-hole 32S, the liquid K3 attached to the rear surface of the sealing film 32 is unlikely to encircle a gap between the perforating tool 10 and the inner edge of the through-hole 32S, and the liquid K3 is unlikely to enter the gap. Therefore, the liquid K3 is unlikely to be held to clog the gap.

Further, as shown in Fig. 6D, even in a case where the perforating tool 10 is pushed into the accommodating portion 24, the liquid K3 is suppressed from being ejected to the outside of the accommodating portion 24 together with the air.

The reason for this is that, in a case where the insertion amount of the perforating tool 10 into the accommodating portion 24 is increased, the accommodating portion 24 accommodates the entire large diameter portion 14, and the shaft portion 12 in which the large diameter portion 14 is not provided reaches the position of the sealing film 32, a gap between the perforating tool 10 and the inner edge of the through-hole 32S is increased. The shaft portion 12 has a smaller diameter than the large diameter portion 14. Therefore, the gap is greater than that in a case where the perforating tool 500 according to the comparative example in which the large diameter portion 14 is not formed is used. Thereby, the liquid K3 inside the accommodating portion 24 is unlikely to be held in the gap.

Therefore, even in a case where the insertion amount of the perforating tool 10 is increased, an air passage is ensured in the gap. Therefore, the liquid K3 is suppressed from being ejected to the outside of the accommodating portion 24.

Further, as shown in Fig. 6E, even in a case where the perforating tool 10 is pulled out from the accommodating portion 24, the inner edge of the through-hole 32S and the perforating tool 10 are unlikely to come into contact with each other. Therefore, the liquid K3 attached to the rear surface of the sealing film 32 around the through-hole 32S is unlikely to be ejected to the outside of the accommodating portion 24.

As described above, by using the perforating tool 10, even if the liquid is attached to the rear surface of the sealing film 32, it is possible to suppress the liquid from being scattered to the outside of the accommodating portion 24 in a case where the sealing film 32 that seals the opening portion 24A of the accommodating portion 24 which accommodates the liquid is perforated.

Further, in the perforating tool 10 according to the present disclosure, as shown in Fig. 3A, the large diameter portion 14 is formed of plate-like portions 14A and 14B that protrude in the radial direction of the shaft portion 12 and that have a plate surface extending in the axial direction. In such a manner, the large diameter portion 14 is formed by the plate-like portions 14A and 14B protruding in the radial direction of the shaft portion 12. Therefore, as shown in Figs. 7A and 7B, the through-hole 32S extending from the shaft portion 12 to the plate-like portions 14A and 14B is formed in the sealing film 32. That is, the through-hole 32S can be formed to a position away from the shaft portion 12. Therefore, for example, in a case where the perforating tool 10 is pulled out from the accommodating portion 24, it is possible to suppress the liquid attached to the shaft portion 12 from being filled in the through-hole 32S.

Further, in the perforating tool 10 according to the present disclosure, the plate-like portions 14A and 14B forming the large diameter portion 14 are formed in a plurality of pieces (that is, two pieces) at positions which are symmetric with respect to the shaft portion 12 as a center. Thereby, a plurality of (that is, two) gaps are formed in the sealing film 32 at positions which are symmetric with respect to the shaft portion 12 as a center. Therefore, even in a case where the liquid is biased and is attached to the rear surface of the sealing film 32, it is easy to ensure an air passage in any of the gaps.

Further, in the perforating tool 10 according to the present disclosure, as shown in Fig. 3D, the thickness t1 of the plate-like portions 14A and 14B is less than the outer diameter (diameter R1) of the shaft portion 12. The thickness t1 of the plate-like portions 14A and 14B is less than the outer diameter (diameter R1) of the shaft portion 12. Therefore, the pressure acting on the sealing film 32 per unit area can be increased in a case where the sealing film 32 is pressed with the same force as compared with a case where the thickness t1 of the plate-like portions 14A and 14B is equal to or greater than the outer diameter (diameter R1) of the shaft portion 12. Therefore, the sealing film 32 is easily perforated.

Further, in the perforating tool 10 according to the present disclosure, as shown in Fig. 3C, front end side parts 14C of the plate-like portions 14A and 14B each have a shape in which the width of the front end side parts 14C in the radial direction of the shaft portion 12 is reduced from the base end side RS of the shaft portion 12 toward the front end side FS. That is, the front ends of the plate-like portions 14A and 14B are pointed. Therefore, the sealing film 32 is easily perforated. On the other hand, in a case where the width of the plate-like portion is a constant width, a resistivity that is applied to the perforating tool 10 by the sealing film 32 during the perforation of the sealing film 32 is large. Thus, it is difficult to perforate the sealing film 32.

Further, in the perforating tool 10 according to the present disclosure, base end side parts 14D of the plate-like portions 14A and 14B each have a shape in which the width of the base end side parts 14D in the radial direction of the shaft portion 12 is reduced from the front end side FS of the shaft portion 12 toward the base end side RS. That is, the rear ends of the plate-like portions 14A and 14B are pointed. Therefore, the plate-like portions 14A and 14B can be easily inserted into the large diameter through-hole 32S formed by the central side part 14E, and the perforating tool 10 can be easily pulled out. On the other hand, in a case where the width of the plate-like portion is a constant width, the plate-like portion is likely to be caught by the opening end of the through-hole 32S, and it is difficult to pull out the perforating tool 10 from the inside of the accommodating portion 24.

Further, in the perforating tool 10 according to the present disclosure, the shaft portion 12 has a pipe line which is formed therein and through which the liquid flows, and functions as the nozzle through which the liquid is suctioned and discharged. In a case where the perforating tool 10 is used, scattering of the liquid to the outside of the accommodating portion 24 is suppressed. Therefore, it is possible to suppress the liquid outside the accommodating portion 24 from being mixed with the liquid inside the perforating tool 10 which is the nozzle.

### (Modification Example 1)

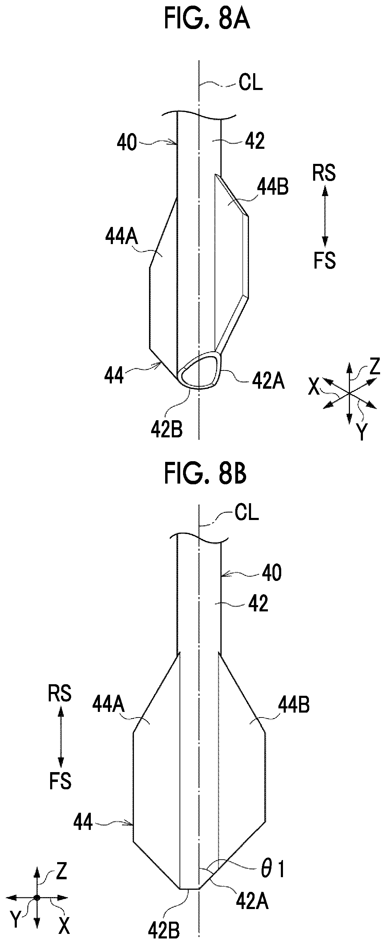

In a perforating tool 40 according to a modification example shown in Figs. 8A and 8B, the front end surface, which is an edge surface of a shaft portion 42 on the front end side FS, has an inclined surface 42A which is inclined with respect to the base end side RS in a direction orthogonal to the axial direction of the shaft portion 42, the inclined surface 42A forming an acute angle θ1 with a straight line (central line CL) extending in the axial direction. Further, the front end surface of the shaft portion 42 has an orthogonal surface 42B that is connected to the inclined surface 42A and that is orthogonal to the axial direction, in addition to the inclined surface 42A.

Configurations of the plate-like portions 44A and 44B that form the large diameter portion 44 in the perforating tool 40 are the same as configurations of the plate-like portions 14A and 14B in the perforating tool 10. However, the front end position of the plate-like portion 44A in the axial direction of the shaft portion 42 coincides with a position of the orthogonal surface 42B. On the other hand, the front end position of the plate-like portion 44B in the axial direction of the shaft portion 42 coincides with a position of the base end side edge portion of the inclined surface 42A.

In the perforating tool 40, the front end surface, which is an edge surface of the shaft portion 42 on the front end side, has the above-mentioned inclined surface 42A. That is, the front end surface has a shape in which the width gradually decreases in the radial direction from the base end side RS toward the front end side FS of the shaft portion 42. That is, the front end surface of the shaft portion 42 is sharper than that in a case where the inclined surface 42A is not provided. Therefore, the sealing film 32 is easily perforated.

### (Modification Example 2)

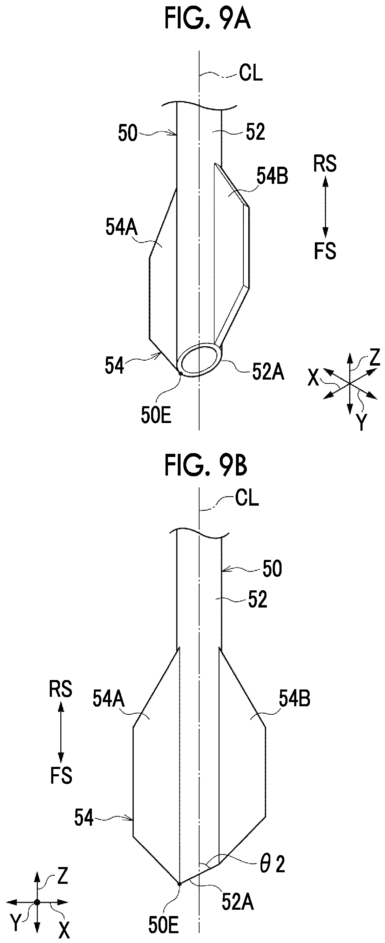

In a perforating tool 50 according to a modification example shown in Figs. 9A and 9B, similarly to the perforating tool 40, the front end surface, which is an edge surface of a shaft portion 52 on the front end side FS, has an inclined surface 52A which is inclined with respect to the base end side RS in a direction orthogonal to the axial direction of the shaft portion 52, the inclined surface 52A forming an acute angle θ2 with the straight line (central line CL) extending in the axial direction. Thus, the front end surface is formed of only the inclined surface 52A.

Configurations of the plate-like portions 54A and 54B that form the large diameter portion 54 in the perforating tool 50 are the same as configurations of the plate-like portions 14A and 14B in the perforating tool 10. However, the front end position of the plate-like portion 54A in the axial direction of the shaft portion 52 coincides with a position of the front end side edge portion of the inclined surface 52A. On the other hand, the front end position of the plate-like portion 54B in the axial direction of the shaft portion 52 coincides with a position of the base end side edge portion of the inclined surface 52A.

In the perforating tool 50, the front end surface of the shaft portion 52 is composed of only the inclined surface 52A. In other words, the front end surface of the shaft portion 52 is formed obliquely with respect to a surface orthogonal to the axial direction of the shaft portion 52.

Therefore, in a case where the perforating tool 50 is moved along the axial direction of the shaft portion 52, first, the corner portion 50E having an acute angle formed by the inclined surface 52A and the side surface, which is the edge surface of the shaft portion 52, comes into contact with the surface of the sealing film 32 (refer to Fig. 1A). That is, the inclined surface 52A and the sealing film 32 are in contact with each other to be close to point contact.

Thereby, for example, the contact area with the sealing film 32 is less than that in a case where the front end surface of the shaft portion is formed of the "orthogonal surface which is orthogonal to the axial direction". Thus, the pressure acting on the sealing film 32 per unit area can be increased in a case where the sealing film 32 is pressed with the same force. Further, as compared with the above-mentioned perforating tool 40, the front end surface of the shaft portion 42 is formed to be sharper. Therefore, an effect of easily perforating the sealing film 32 is enhanced.

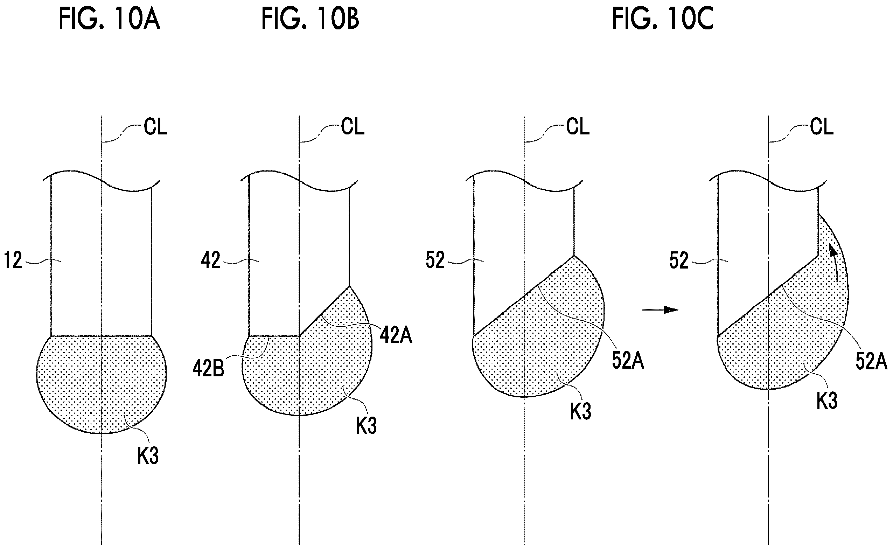

Here, Fig. 10A shows the shaft portion 12 of the perforating tool 10 in which the front end surface is formed of only the "orthogonal surface which is orthogonal to the axial direction". Fig. 10B shows the shaft portion 42 of the perforating tool 40 in which the inclined surface 42A and the orthogonal surface 42B are formed on the front end surface. Fig. 10C shows the shaft portion 52 of the perforating tool 50 of which the front end surface is the inclined surface 52A. It should be noted that Figs. 10A to 10C does not show the plate-like portion.

As shown in Figs. 10A to 10C, as the inclined surface on the front end surface of the shaft portion is larger (in other words, the shaft portion 52 is greater than the shaft portion 42, or the shaft portion 42 is greater than the shaft portion 12), the liquid (for example, the liquid K3) attached to the end surface is formed to be offset from the central line CL of the shaft portion to the side surface of the shaft portion.

For example, as shown in Fig. 10C, a liquid droplet may be formed on the edge surface of the shaft portion 52, that is, the inclined surface 52A. However, in such a manner, in a case where the liquid attached to the edge surface is formed by being offset from the central line CL of the shaft portion to the side surface side, the liquid is likely to encircle the side surface of the shaft portion. In a case where the liquid encircles the side surface of the shaft portion, the entire amount of the liquid droplet may not drop, and the liquid may remain in the shaft portion 52 in a case where the liquid is discharged from the shaft portion 52 which is the nozzle.

On the other hand, in a case where the liquid droplet is formed on the inclined surface 42A and the orthogonal surface 42B of the shaft portion 42 shown in Fig. 10B, the liquid is unlikely to encircle the side surface of the shaft portion as compared with the shaft portion 52 in which the orthogonal surface is not formed. Therefore, in a case where the liquid is discharged from the shaft portion 42, the liquid can be easily used without waste. The shaft portion 12 shown in Fig. 10A is easier to use the liquid without waste than the shaft portion 42.

In such a manner, in a case where the inclined surface is made large on the edge surface of the shaft portion, the perforation performance of the sealing film is improved, and in a case where the orthogonal surface is made large, the amount of remaining liquid can be reduced.

### (Modification Example 3)

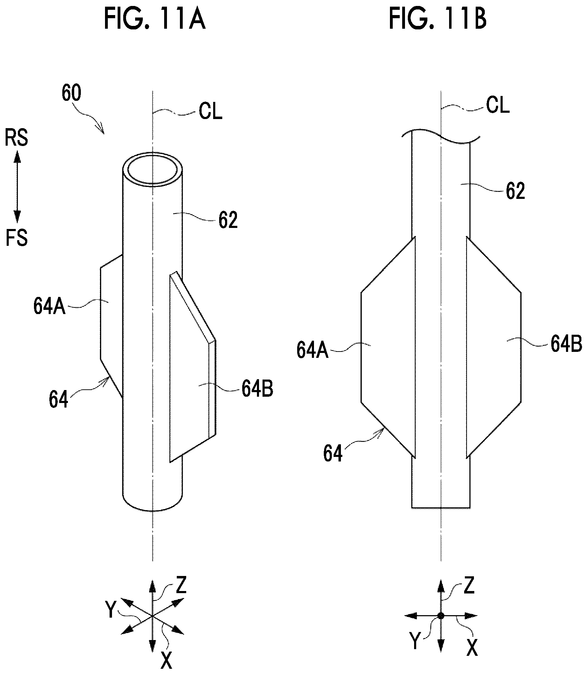

A perforating tool 60 according to a modification example shown in Figs. 11A and 11B includes a shaft portion 62 and plate-like portions 64A and 64B having the same configurations as the shaft portion 12 and the plate-like portions 14A and 14B in the perforating tool 10, but is different from the perforating tool 10 in the following points.

In the perforating tool 60, front ends of the plate-like portions 64A and 64B forming a large diameter portion 64 are disposed at positions which are offset from a front end surface of the shaft portion 62 toward the base end side.

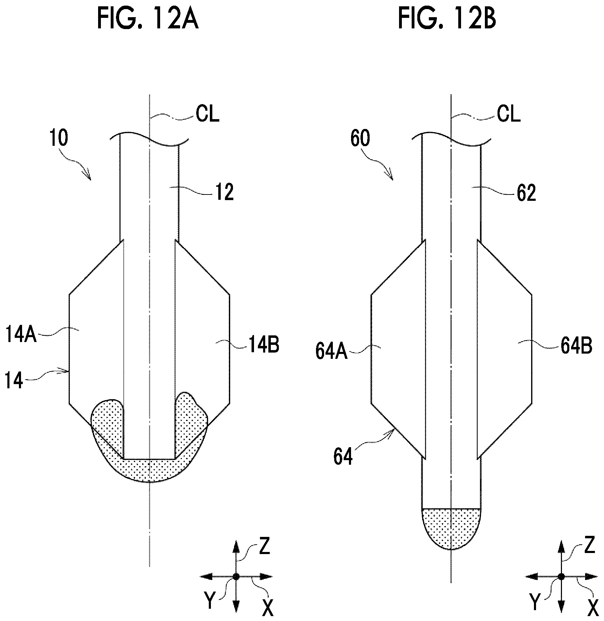

Here, Fig. 12A shows the shaft portion 12 and the plate-like portions 14A and 14B of the perforating tool 10. In the perforating tool 10, the front ends of the plate-like portions 14A and 14B coincide with the positions of the front end surfaces of the shaft portion 12. Therefore, the liquid attached to the edge surface of the shaft portion 12 is likely to encircle the plate-like portions 14A and 14B.

On the other hand, Fig. 12B shows the shaft portion 62 and the plate-like portions 64A and 64B of the perforating tool 60. In the perforating tool 60, the front ends of the plate-like portions 64A and 64B are disposed at positions which are offset from the front end surface of the shaft portion 62 toward the base end side. Therefore, the liquid attached to the edge surface of the shaft portion 62 is unlikely to encircle the plate-like portions 64A and 64B. Thereby, in the perforating tool 60, in a case where the liquid is discharged from the shaft portion 62, it is possible to suppress the liquid droplet from encircling the plate-like portions 64A and 64B and remaining as liquid.

### (Modification Example 4)

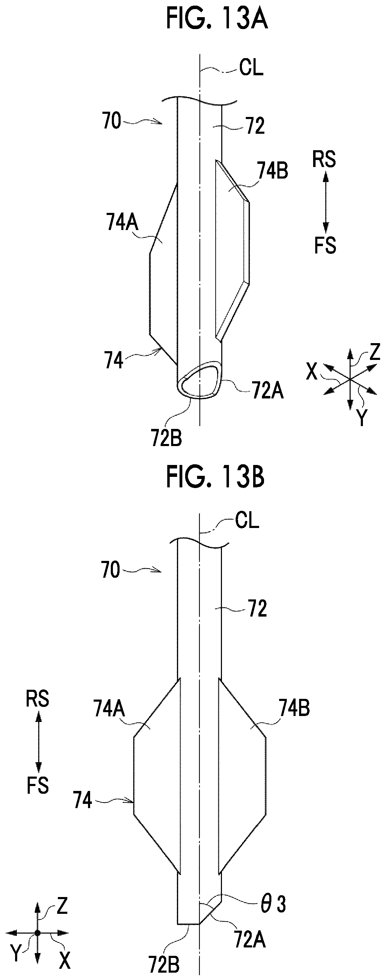

In a perforating tool 70 according to a modification example shown in Figs. 13A and 13B, similarly to the perforating tool 60 shown in Figs. 11A and 11B, front ends of plate-like portions 74A and 74B forming a large diameter portion 74 are disposed at positions which are offset from a front end surface of a shaft portion 72 toward the base end side. Further, the front end surface, which is an edge surface of the shaft portion 72 on the front end side FS, has an inclined surface 72A which is inclined with respect to the base end side RS in a direction orthogonal to the axial direction of the shaft portion 72, the inclined surface 72A forming an acute angle θ3 with the straight line (central line CL) extending in the axial direction. Furthermore, the front end surface of the shaft portion 72 has an orthogonal surface 72B that is connected to the inclined surface 72A and that is orthogonal to the axial direction, in addition to the inclined surface 72A.

By using such a perforating tool 70, it is possible to obtain both the same effects as those of the perforating tool 40 shown in Figs. 8A and 8B and the same effects as those of the perforating tool 60 shown in Figs. 11A and 11B.

### (Modification Example 5)

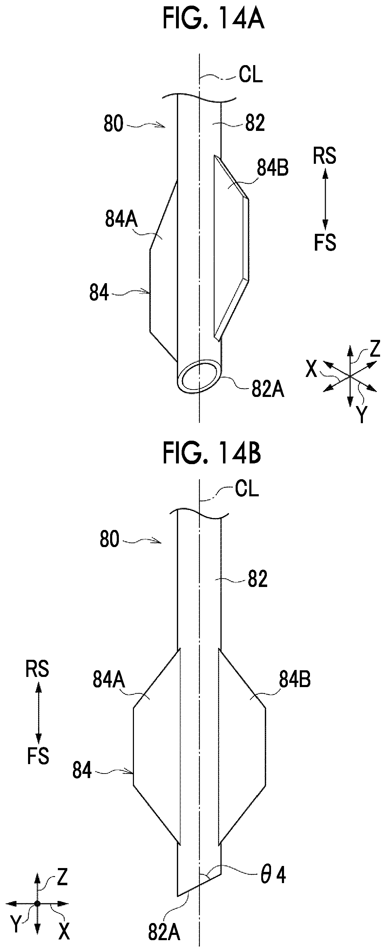

In a perforating tool 80 according to a modification example shown in Figs. 14A and 14B, similarly to the perforating tool 60 shown in Figs. 11A and 11B, front ends of plate-like portions 84A and 84B forming a large diameter portion 84 are disposed at positions which are offset from a front end surface of a shaft portion 82 toward the base end side. Further, the front end surface, which is an edge surface of the shaft portion 82 on the front end side FS, has an inclined surface 82A which is inclined with respect to the base end side RS in a direction orthogonal to the axial direction of the shaft portion 82, the inclined surface 82A forming an acute angle θ4 with the straight line (central line CL) extending in the axial direction. The front end surface of the shaft portion 82 is formed only on the inclined surface 52A.

By using such a perforating tool 80, it is possible to obtain both the same effects as those of the perforating tool 50 shown in Figs. 9A and 9B and the same effects as those of the perforating tool 60 shown in Figs. 11A and 11B.

### (Other Modification Examples)

In the perforating tool 10, as shown in Fig. 3C, the front end side parts 14C of the plate-like portions 14A and 14B each have a shape in which the width in the radial direction of the shaft portion 12 is reduced from the base end side RS toward the front end side FS. Further, the base end side parts 14D of the plate-like portions 14A and 14B each have a shape in which the width in the radial direction of the shaft portion 12 is reduced from the front end side FS toward the base end side RS, but the embodiment of the present disclosure is not limited thereto.

For example, the plate-like portions may be configured to have the "same width" along the axial direction of the shaft portion. That is, the plate-like portion may have a rectangular shape or a square shape in the front view. Even with such a shape, it is possible to suppress the scattering of the liquid to the outside of the accommodating portion 24 in a case of perforating the sealing film 32 that seals the opening portion 24A of the accommodating portion 24 which accommodates the liquid. Further, in a case where the plate-like portions have the same width along the axial direction of the shaft portion, the plate-like portions are easily manufactured.

In addition, the front end side part 14C of the plate-like portion may have a shape in which the width decreases from the base end side RS toward the front end side FS. Alternatively, only the base end side part 14D of the plate-like portion may have a shape in which the width decreases from the front end side FS toward the base end side RS.

Further, the plate-like portion may have a shape in which the width decreases from the base end side RS toward the front end side FS or a shape in which the width decreases from the front end side FS toward the base end side RS over the entire length of the shaft portion 12 in the axial direction. Examples of such a shape include a shape in which the shape of the plate-like portion in the front view is a triangular shape.

Further, in the perforating tool 10, as shown in Fig. 3A, the large diameter portion 14 is formed of the two plate-like portions 14A and 14B, but the embodiment of the present disclosure is not limited thereto. For example, the large diameter portion may be formed of one plate-like portion or may be formed of three or more plate-like portions. That is, in each embodiment in which the large diameter portion is formed of a plate-like portion, the number of plate-like portions is not particularly limited. In a case where the number of plate-like portions is reduced, it is easy to form the large diameter portion. In a case where the number of plate-like portions is increased, it is possible to form a large number of gaps around the shaft portion. In addition, in a case where the large diameter portion is formed of a plurality of plate-like portions, it is preferable that the plate-like portions are arranged at equal intervals in a circumferential direction of the shaft portion.

### <Second Embodiment of Perforating Tool>

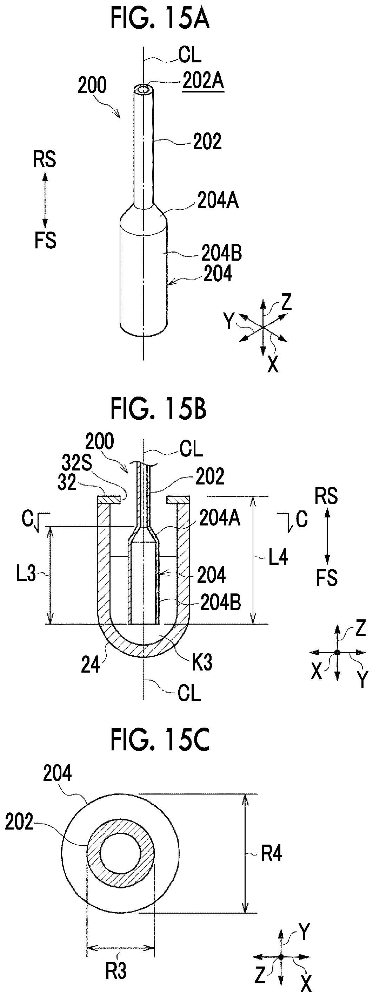

A perforating tool 200 shown in Figs. 15A to 15C is a perforating tool capable of perforating a sealing film for sealing an opening portion of a container accommodating a liquid, as in each perforating tool according to the first embodiment. That is, the perforating tool 200 is a perforating tool capable of perforating the sealing film 32 that seals the opening portions 20A, 22A, 24A, 26A, and 28A which are formed in the accommodating portions 20, 22, 24, 26, and 28 of the cartridge RC shown in Fig. 1.

As shown in Figs. 15A and 15B, the perforating tool 200 includes a rod-shaped shaft portion 202 extending from a front end side FS that pierces the sealing film 32 to a base end side RS, and a tubular portion 204 formed at a front end portion of the shaft portion 202 as a large diameter portion.

The shaft portion 202 has a tubular shape which has a circular cross section orthogonal to the axial direction of the shaft portion 202, and a pipe line 202A, through which a liquid flows, is formed in the shaft portion 202. Therefore, the shaft portion 202 functions as a nozzle for suctioning and discharging the liquid.

On the other hand, the tubular portion 204 is a tubular portion which has a circular cross-sectional shape orthogonal to the axial direction. Further, the tubular portion 204 has a shape similar to the shaft portion 202 and has a shape in which the diameter of the shaft portion 202 is increased. That is, a rear end side part 204A of the tubular portion 204 has a tapered shape that gradually increases in diameter from the base end side RS toward the front end side FS of the shaft portion 202. A front end side part 204B is connected to the front end of the rear end side part 204A. The front end side part 204B is formed in a tubular shape having a diameter which is identical along the axial direction of the shaft portion 202. The tubular portion 204, that is, the front end of the front end side part 204B is formed to be orthogonal to the axial direction of the shaft portion 202. The term "similar shape" indicates that the outer shapes of the shaft portion 202 and the tubular portion 204 are similar to each other. Wall thicknesses of the shaft portion 202 and the tubular portion 204 may be different from each other or may be the same as each other.

Here, as shown in Fig. 15C, a diameter R4 of a circumcircle which circumscribes an outer shape of a cross section of the tubular portion 204 is greater than a diameter R3 of a circumcircle which circumscribes an outer shape of a cross section of the shaft portion 202. The "cross section" of the tubular portion 204 and the "cross section" of the shaft portion 202 are cross sections orthogonal to the axial direction of the shaft portion 202 and are cross sections which are cut along the line C-C in Fig. 15B.

Further, as shown in Fig. 15B, a length L3 from the front end of the shaft portion 202, that is, the front end of the perforating tool 200, to the end portion on the base end side RS of the tubular portion 204 which is the large diameter portion is shorter than a maximum insertion depth L4 of the shaft portion 202 with respect to the accommodating portion 24. It should be noted that the tubular portion 204 is a part of the shaft portion 202, and the "front end of the shaft portion 202" indicates the front end of the tubular portion 204.

### <Actions and Effects>

In the perforating tool 200 according to the present disclosure, as shown in Fig. 15A, the tubular portion 204 as the large diameter portion is formed at the front end portion of the shaft portion 202. As shown in Fig. 15C, in the tubular portion 204, the diameter R4 of the circumcircle of the traverse cross section of the tubular portion 204 orthogonal to the axial direction of the shaft portion 202 is greater than the diameter R3 of the circumcircle of the traverse cross section of the shaft portion 202.

Even in a case where the sealing film 32 is perforated using the perforating tool 200, as shown in Fig. 15B, the through-hole 32S is opened in the sealing film 32. In a case where the perforating tool 200 is pushed into the accommodating portion 24, the liquid is suppressed from being ejected to the outside of the accommodating portion 24 together with the air.

The reason for this is that, in a case where the insertion amount of the perforating tool 200 into the accommodating portion 24 is increased, the accommodating portion 24 accommodates the entire tubular portion 204, and the shaft portion 202 in which the tubular portion 204 is not provided reaches the position of the sealing film 32, a gap between the perforating tool 200 and the inner edge of the through-hole 32S is increased. The shaft portion 202 has a smaller diameter than the tubular portion 204. Therefore, a gap between the shaft portion 202 and the inner edge of the through-hole 32S is greater than a gap between the tubular portion 204 and the inner edge of the through-hole 32S. Further, the gap is large even in comparison with a case where the perforating tool 500 according to the comparative example in which the diameter of the shaft portion is constant in a range from the front end side to the base end side is used. Thereby, the liquid K3 inside the accommodating portion 24 is unlikely to be held in the gap.

Therefore, even in a case where the insertion amount of the perforating tool 200 is increased, a passage of air in the gap is consistently ensured. Therefore, the liquid K3 is suppressed from being ejected to the outside of the accommodating portion 24.

Further, in the perforating tool 200 according to the present disclosure, the large diameter portion is the tubular portion 204 having the circular cross-sectional shape orthogonal to the axial direction. That is, as in a case where the large diameter portion is a plate-like portion protruding in the radial direction of the shaft portion, there is no plate-like member protruding to the outside of a tubular member. Therefore, the perforating tool 200 is less likely to be caught by any member which is disposed around the perforating tool.

Further, in the perforating tool 200 according to the present disclosure, the tubular portion 204, which is the large diameter portion, has a shape similar to the shaft portion 202 and has a shape in which the diameter of the shaft portion 202 is increased. The tubular portion 204 has a shape similar to the shaft portion 202. Therefore, in a case where the perforating tool 200 is inserted into the accommodating portion 24 and the shaft portion 202 is disposed in the through-hole 32S, a gap having a uniform width is likely to be formed around the shaft portion 202. Thereby, even in a case where the liquid is biased and is attached to the rear surface of the sealing film 32, the gap is likely to be formed in a part to which the liquid is not attached. Therefore, the air passage is likely to be ensured.

Further, the diameter of the shaft portion 202 is increased in the tubular portion 204. Therefore, a cross-sectional area of the tubular portion 204 is greater than that of the shaft portion 202. Therefore, a strength of the tubular portion 204 that is likely to be loaded in a case of perforating the sealing film 32 is greater than that of the other part. Therefore, the perforating tool 200 is unlikely to be damaged, and thus maintenance is easy.

### (Modification Example 1)

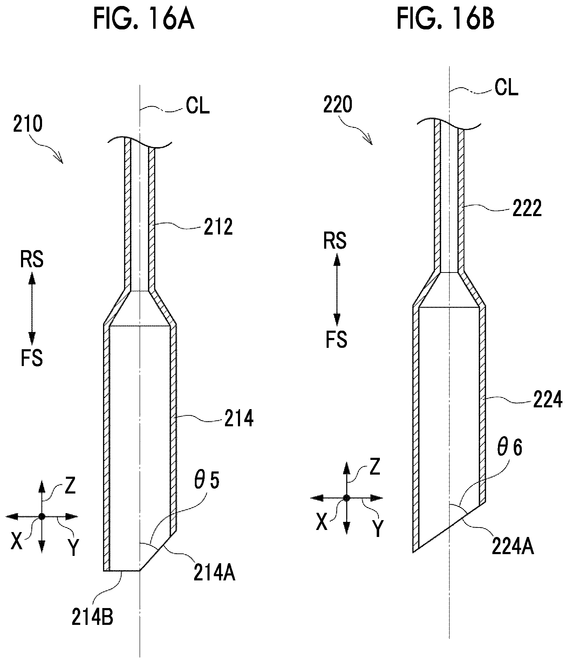

A perforating tool 210 according to a modification example shown in Fig. 16A includes a shaft portion 212 and a tubular portion 214. The perforating tool 210 is different from the perforating tool 200 in the following points.

A front end surface, which is an edge surface of the tubular portion 214 on the front end side FS, is an inclined surface 214A which is inclined toward the base end side RS with respect to a direction orthogonal to the axial direction of the shaft portion 212, the inclined surface 214A forming an acute angle θ5 with the straight line (central line CL) extending in the axial direction. Further, the front end surface of the tubular portion 214 has an orthogonal surface 214B that is connected to the inclined surface 214A and that is orthogonal to the axial direction, in addition to the inclined surface 214A.

By using such a perforating tool 210, it is possible to obtain the same effect as the perforating tool 40 shown in Figs. 8A and 8B.

### (Modification Example 2)

A perforating tool 220 according to a modification example shown in Fig. 16B includes a shaft portion 222 and a tubular portion 224. The perforating tool 220 is different from the perforating tool 200 in the following points.

In the perforating tool 220 according to a modification example shown in Fig. 16B, similarly to the perforating tool 210, the front end surface, which is an edge surface of the tubular portion 214 on the front end side FS, has an inclined surface 224A which is inclined toward the base end side RS with respect to the direction orthogonal to the axial direction of the shaft portion 212, the inclined surface 224A having an acute angle θ6 with the straight line (central line CL) extending in the axial direction. Thus, the front end surface is formed of only the inclined surface 224A.

By using such a perforating tool 220, it is possible to obtain the same effect as the perforating tool 50 shown in Figs. 9A and 9B.

### (Modification Example 3)

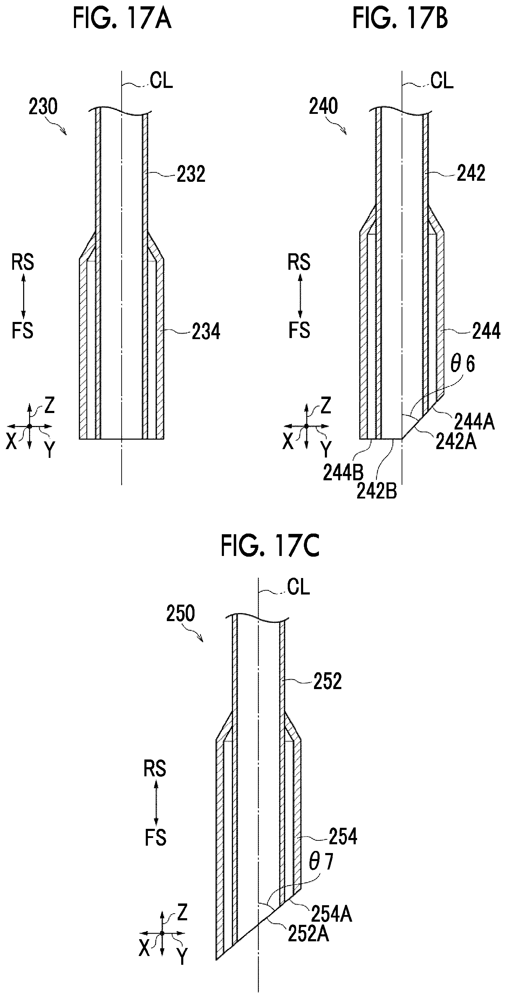

A perforating tool 230 according to a modification example shown in Fig. 17A includes a shaft portion 232 and a tubular portion 234. The perforating tool 230 is different from the perforating tool 200 in the following points.

In the perforating tool 230, the shaft portion 232 is inserted into the tubular portion 234. Specifically, the perforating tool 230 has a double pipe formed of the shaft portion 232 that is a straight pipe having the same cross-sectional shape over the axial direction and the tubular portion 234 that covers an outer circumference of the shaft portion 232. The tubular portion 234 has an end portion on the base end side RS that is reduced in diameter from the front end side FS toward the base end side RS and that is bonded to the shaft portion 232.

The perforating tool 230 having such a double pipe structure can be formed, for example, by separately manufacturing the shaft portion 232 and the tubular portion 234 and cementing the shaft portion 232 and the tubular portion 234. Therefore, it is easy to form the large diameter portion. On the other hand, in a case where the large diameter portion is formed by the tubular portion in which the diameter of the shaft portion is increased, it is necessary for the large diameter portion to be formed by cutting, squeezing, or the like. Thus, it is difficult to form the large diameter portion.

Further, for example, in a case where the liquid suctioned into the accommodating portion 24 is discharged to the outside of the accommodating portion 24 using the perforating tool 230 as a nozzle, the liquid is discharged through the inside of the shaft portion 232, which is a straight pipe, to the outside of the accommodating portion 24. Therefore, turbulence or the like is unlikely to occur in a case where the liquid passes through the large diameter portion, and the discharging performance is stable. On the other hand, in a case where the large diameter portion is formed by the tubular portion in which the shaft portion is enlarged in diameter, a bent portion is formed in the pipe line at the enlarged-diameter part. Further, in a case where the processing accuracy is poor, unevenness may be formed in the enlarged-diameter part. In a case where the bent portion or unevenness is present on an inner surface of a pipe line that handles the liquid, turbulence is likely to occur in the pipe line, or dirt is likely to be attached to the pipe line. In order to suppress occurrence of such turbulence or contamination, a measure of polishing the inner surface of the pipe line can be used, but such a measure is not always sufficient, and it takes time to produce.

By forming the perforating tool 230 to have the double pipe structure, it is less necessary to polish the inner surface of the pipe line. Even in a case where the inner surface of the pipe line is polished, the polishing work is easy.

### (Modification Example 4)

A perforating tool 240 according to a modification example shown in Fig. 17B includes a shaft portion 242 and a tubular portion 244. The perforating tool 240 is different from the perforating tool 230 in the following points.

A front end surface, which is an edge surface of the shaft portion 242 on the front end side FS, has an inclined surface 242A which is inclined with respect to the base end side RS in a direction orthogonal to the axial direction of the shaft portion 242, the inclined surface 242A forming an acute angle θ6 with the straight line (central line CL) extending in the axial direction. Further, the front end surface of the shaft portion 242 has an orthogonal surface 242B that is connected to the inclined surface 242A and that is orthogonal to the axial direction, in addition to the inclined surface 242A.

Similarly, the front end surface, which is an edge surface of the tubular portion 244 on the front end side FS, has an inclined surface 244A which is inclined with respect to the base end side RS in a direction orthogonal to the axial direction of the tubular portion 244, the inclined surface 244A forming an acute angle θ6 with the straight line (central line CL) extending in the axial direction. Further, the front end surface of the tubular portion 244 has the orthogonal surface 244B that is connected to the inclined surface 244A and that is orthogonal to the axial direction, in addition to the inclined surface 244A.

By using such a perforating tool 240, it is possible to obtain the same effect as the perforating tool 40 shown in Figs. 8A and 8B.

It should be noted that the inclined surfaces 242A and 244A are surfaces formed on the same plane, and the orthogonal surfaces 242B and 244B are also surfaces formed on the same plane. The inclined angles of the inclined surfaces 242A and 244A are set to the same acute angle θ6, but may be different angles. Further, at least one of the inclined surfaces 242A or 244A may be formed. That is, in any one of the shaft portion 242 or the tubular portion 244, the front end surface may be formed of only an orthogonal surface which is orthogonal to the axial direction.

### (Modification Example 5)

A perforating tool 250 according to a modification example shown in Fig. 17C includes a shaft portion 252 and a tubular portion 254. The perforating tool 250 is different from the perforating tool 230 in the following points.

A front end surface, which is an edge surface of the shaft portion 252 on the front end side FS, has an inclined surface 252A which is inclined with respect to the base end side RS in a direction orthogonal to the axial direction of the shaft portion 252, the inclined surface 252A forming an acute angle θ7 with the straight line (central line CL) extending in the axial direction. Thus, the front end surface is formed of only the inclined surface 252A.

Similarly, the front end surface, which is an edge surface of the tubular portion 254 on the front end side FS, has an inclined surface 254A which is inclined with respect to the base end side RS in a direction orthogonal to the axial direction of the tubular portion 254, the inclined surface 254A forming an acute angle θ7 with the straight line (central line CL) extending in the axial direction. Thus, the front end surface is formed of only the inclined surface 254A.

By using such a perforating tool 250, it is possible to obtain the same effect as the perforating tool 50 shown in Figs. 9A and 9B.

It should be noted that the inclined surfaces 252A and 254A are surfaces formed on the same plane. The inclined angles of the inclined surfaces 252A and 254A are set to the same acute angle θ7, but may be set to different angles. Further, at least one of the inclined surfaces 252A or 254A may be formed. That is, in any one of the shaft portion 252 or the tubular portion 254, the front end surface may be formed of only an orthogonal surface which is orthogonal to the axial direction.

### (Modification Example 6)

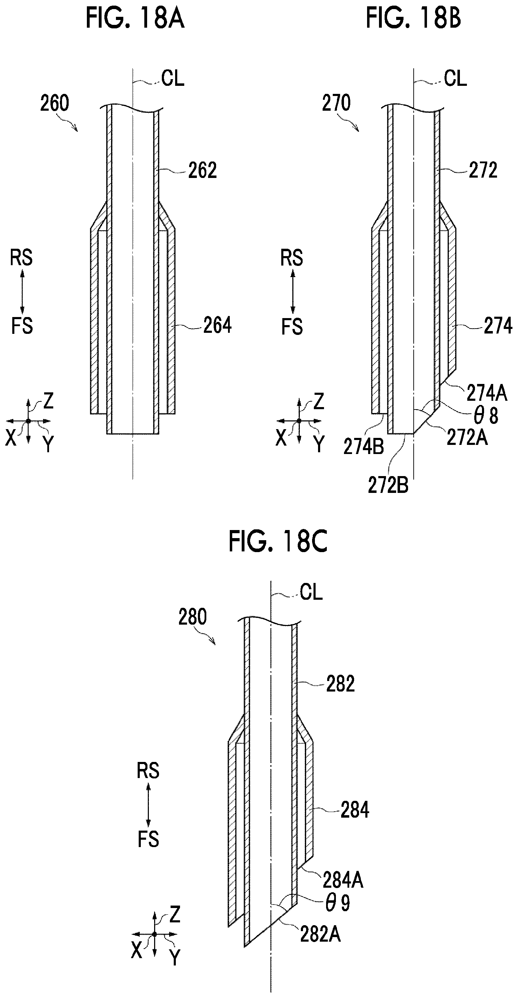

A perforating tool 260 according to a modification example shown in Fig. 18A includes a shaft portion 262 and a tubular portion 264. The perforating tool 260 is different from the perforating tool 230 in the following points.

In the perforating tool 260, the front end of the tubular portion 264 is disposed at a position which is offset from the front end surface of the shaft portion 262 toward the base end side. By using such a perforating tool 260, it is possible to obtain the same effect as the perforating tool 60 shown in Figs. 11A and 11B.

### (Modification Example 7)

A perforating tool 270 according to a modification example shown in Fig. 18B includes a shaft portion 272 and a tubular portion 274. The perforating tool 270 is different from the perforating tool 230 in the following points.

In the perforating tool 270, the front end of the tubular portion 274 is disposed at a position which is offset from the front end surface of the shaft portion 272 toward the base end side.

Further, the front end surface, which is an edge surface of the shaft portion 272 on the front end side FS, has an inclined surface 272A which is inclined with respect to the base end side RS in a direction orthogonal to the axial direction of the shaft portion 272, the inclined surface 272A forming an acute angle θ8 with the straight line (central line CL) extending in the axial direction. Furthermore, the front end surface of the shaft portion 272 has an orthogonal surface 272B that is connected to the inclined surface 272A and that is orthogonal to the axial direction, in addition to the inclined surface 272A.

Similarly, the front end surface, which is an edge surface of the tubular portion 274 on the front end side FS, has an inclined surface 274A which is inclined with respect to the base end side RS in a direction orthogonal to the axial direction of the tubular portion 274, the inclined surface 274A forming an acute angle θ8 with the straight line (central line CL) extending in the axial direction. Further, the front end surface of the tubular portion 274 has an orthogonal surface 274B that is connected to the inclined surface 274A and that is orthogonal to the axial direction, in addition to the inclined surface 274A.

By using such a perforating tool 270, it is possible to obtain both the same effects as those of the perforating tool 40 shown in Figs. 8A and 8B and the same effects as those of the perforating tool 60 shown in Figs. 11A and 11B.

### (Modification Example 8)

A perforating tool 280 according to a modification example shown in Fig. 18C includes a shaft portion 282 and a tubular portion 284. The perforating tool 280 is different from the perforating tool 230 in the following points.

In the perforating tool 280, the front end of the tubular portion 284 is disposed at a position which is offset from a front end surface of the shaft portion 282 toward the base end side.

Further, the front end surface, which is an edge surface of the shaft portion 282 on the front end side FS, has an inclined surface 282A which is inclined with respect to the base end side RS in a direction orthogonal to the axial direction of the shaft portion 282, the inclined surface 282A forming an acute angle θ9 with the straight line (central line CL) extending in the axial direction. Thus, the front end surface is formed of only the inclined surface 282A.

Similarly, the front end surface, which is an edge surface of the tubular portion 284 on the front end side FS, has an inclined surface 284A which is inclined with respect to the base end side RS in a direction orthogonal to the axial direction of the tubular portion 284, the inclined surface 284A forming an acute angle θ9 with the straight line (central line CL) extending in the axial direction. Thus, the front end surface is formed of only the inclined surface 284A.

By using such a perforating tool 280, it is possible to obtain both the same effects as those of the perforating tool 50 shown in Figs. 9A and 9B and the same effects as those of the perforating tool 60 shown in Figs. 11A and 11B.

### (Other Modification Examples)

In each of the above-mentioned examples of the second embodiment in which the tubular portion is formed as the large diameter portion, the tubular portion has a similar shape to the shaft portion. However, the embodiment of the present disclosure is not limited thereto. For example, in a case where the shaft portion has a circular shape, the tubular portion may have a polygonal shape or an elliptical shape.

Further, in both the first embodiment in which the plate-like portion is formed as the large diameter portion and the second embodiment in which the tubular portion is formed as the large diameter portion, it is not necessary to form the pipe line through which the liquid flows in the shaft portion. That is, the perforating tool according to the present disclosure may be a tool capable of perforating the sealing film 32.

Further, although the cartridge RC has been described as an example of the container to be perforated by each of the perforating tools according to the present disclosure, the perforating tool 10 can be used for another container which is capable of accommodating the liquid.

The present disclosure is not limited to the above-mentioned embodiments, and can be implemented with appropriate modifications, such as omitting a configuration or replacing a configuration with a different configuration within the scope that does not deviate from the gist of the present disclosure.

The disclosure of JP2022-045776 filed on March 22, 2022 is incorporated herein by reference in its entirety.

All documents, patent applications, and technical standards described in the present specification are incorporated into the present specification by reference to the same extent as in a case where the individual documents, patent applications, and technical standards were specifically and individually stated to be incorporated by reference.

## Claims

1. A perforating tool capable of perforating a sealing film for sealing an opening portion of a container that accommodates a liquid, the perforating tool comprising:
a shaft portion that is pierced through the sealing film and has a rod shape extending from a front end side to a base end side; and
a large diameter portion that is formed at a front end portion of the shaft portion, the large diameter portion having a diameter of a circumcircle, which circumscribes an outer shape of a traverse cross section orthogonal to an axial direction, greater than a diameter of a circumcircle, which circumscribes an outer shape of the traverse cross section of the shaft portion,
wherein a length from a front end of the shaft portion to an end portion of the large diameter portion on the base end side is shorter than a maximum insertion depth of the shaft portion into the container.

2. The perforating tool according to claim 1,
wherein the large diameter portion is formed of a plate-like portion that protrudes in a radial direction of the shaft portion and that has a plate surface extending in the axial direction.

3. The perforating tool according to claim 2,
wherein a plurality of the plate-like portions are formed at positions which are symmetric with respect to the shaft portion as a center.

4. The perforating tool according to claim 2 or 3,
wherein a thickness of the plate-like portion is less than an outer diameter of the shaft portion.

5. The perforating tool according to any one of claims 2 to 4,
wherein a front end surface, which is an edge surface of the shaft portion on the front end side, has an inclined surface that is inclined toward the base end side with respect to a direction orthogonal to the axial direction of the shaft portion, the inclined surface forming an acute angle with a straight line extending in the axial direction.

6. The perforating tool according to claim 5,
wherein the front end surface has, in addition to the inclined surface, an orthogonal surface which is connected to the inclined surface and which is orthogonal to the axial direction.

7. The perforating tool according to claim 5,
wherein the front end surface is formed of only the inclined surface.

8. The perforating tool according to any one of claims 2 to 7,
wherein a front end of the plate-like portion is disposed at a position which is offset from a front end surface as an edge surface of the shaft portion on the front end side toward the base end side.

9. The perforating tool according to any one of claims 2 to 8,
wherein a front end side part of the plate-like portion has a shape in which a width of the shaft portion in the radial direction is reduced from the base end side toward the front end side.

10. The perforating tool according to any one of claims 2 to 9,
wherein a base end side part of the plate-like portion has a shape in which a width of the shaft portion in the radial direction is reduced from the front end side toward the base end side.

11. The perforating tool according to claim 1,
wherein the large diameter portion is a tubular portion having a circular or polygonal cross-sectional shape orthogonal to the axial direction.

12. The perforating tool according to claim 11,
wherein the tubular portion has a shape similar to the shaft portion and has a shape in which a diameter of the shaft portion is increased.

13. The perforating tool according to claim 11 or 12,
wherein a front end surface, which is an edge surface of the tubular portion on the front end side, has an inclined surface that is inclined toward the base end side with respect to a direction orthogonal to the axial direction of the shaft portion, the inclined surface forming an acute angle with a straight line extending in the axial direction.

14. The perforating tool according to claim 13,
wherein the front end surface has, in addition to the inclined surface, an orthogonal surface which is connected to the inclined surface and which is orthogonal to the axial direction.

15. The perforating tool according to claim 13,
wherein the front end surface is formed of only the inclined surface.

16. The perforating tool according to claim 12,
wherein the shaft portion is inserted into the tubular portion.

17. The perforating tool according to claim 16,
wherein at least one of front end surfaces, which are edge surfaces of the shaft portion and the tubular portion on the front end side, has an inclined surface that is inclined toward the base end side with respect to a direction orthogonal to the axial direction of the shaft portion, the inclined surface forming an acute angle with a straight line extending in the axial direction.

18. The perforating tool according to claim 17,
wherein the front end surface has, in addition to the inclined surface, an orthogonal surface which is connected to the inclined surface and which is orthogonal to the axial direction.

19. The perforating tool according to claim 17,
wherein the front end surface is formed of only the inclined surface.

20. The perforating tool according to any one of claims 1 to 19,
wherein the shaft portion has a pipe line which is formed therein and through which a liquid flows, and functions as a nozzle through which the liquid is suctioned and discharged.
